(19) Europäisches Patentamt
European Patent Office
Office européen des brevets

(11) Veröffentlichungsnummer: **0 231 803 B1**

# (12) EUROPÄISCHE PATENTSCHRIFT

(45) Veröffentlichungstag der Patentschrift: **11.09.91**

(51) Int. Cl.$^5$: **C09D 5/44**

(21) Anmeldenummer: **87100687.0**

(22) Anmeldetag: **20.01.87**

## (54) Elektrisch abscheidbare Zubereitungen mit niedrigem Gehalt an organischen Lösungsmitteln und Verfahren zu deren Herstellung.

(30) Priorität: **31.01.86 DE 3602980**

(43) Veröffentlichungstag der Anmeldung:
**12.08.87 Patentblatt 87/33**

(45) Bekanntmachung des Hinweises auf die Patenterteilung:
**11.09.91 Patentblatt 91/37**

(84) Benannte Vertragsstaaten:
**AT BE CH DE FR GB IT LI NL SE**

(56) Entgegenhaltungen:
**EP-A- 0 164 546**
**DE-A- 3 315 469**

(73) Patentinhaber: **HOECHST AKTIENGESELLSCHAFT**
**Postfach 80 03 20**
**W-6230 Frankfurt am Main 80(DE)**

(72) Erfinder: **Plum, Helmut, Dr.**
**Nibelungenstrasse 3**
**W-6204 Taunusstein 4(DE)**

**EP 0 231 803 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Verfahren zur Herstellung von kathodisch abscheidbaren Lack-Zubereitungen, die Bindemittel enthalten, die bei niedriger Temperatur vernetzen, sind z.B. in der am selben Tag eingereichten DE-Patentanmeldung P 36 02 981.5 (Titel: Härtungskomponenten für Kunstharze, die zur Amid- oder Esterbildung mit Carbonsäuren befähigte Gruppen enthalten), der AT-Patentanmeldung 1602/85 (Titel: "Verfahren zur Herstellung von Vernetzungskomponenten für Lackbindemittel") sowie den DE-Offenlegungsschriften 3 315 469 und 34 17 441 beschrieben. Diese Bindemittel bestehen aus aminogruppenhaltigen Kunstharzen, die gegebenenfalls zusätzlich OH-Gruppen enthalten und dem Härter für diese Kunstharze. Die Aminogruppen können primär, sekundär oder tertiär sein. Zur Herstellung der Lackzubereitungen werden die in organischen Lösungsmitteln vorliegenden Kunstharze und Härter vermischt und deren Aminogruppen ganz oder teilweise durch Umsetzung mit einer wasserlöslichen Säure neutralisiert. Anschließend wird mit Wasser verdünnt. Die organischen Lösungsmittel, in denen die Kunstharze vorliegen, sind wasserlöslich und besitzen im allgemeinen einen Siedepunkt von über 100 °C, z.B. Diethylenglykolmono- oder -dimethylether oder Propylenglykolmono- oder -dimethylether. Ihre Anwesenheit ist bei der Herstellung der Kunstharze erforderlich. So lassen sich z.B. Polymerisate aus $\alpha,\beta$-ungesättigten Monomeren nur in Lösung herstellen, wobei niedrige Molekulargewichte nur durch eine Polymerisation bei höheren Temperaturen erreicht werden können. Auch die Herstellung geeigneter Polymerisate durch polymeranaloge Umsetzung gelingt nur in Lösungsmitteln bei höherer Temperatur. Die bei Raumtemperatur festen Epoxidharze müssen vor der Reaktion mit Amino- und gegebenenfalls auch Säuregruppen enthaltenden Verbindungen in organischen Lösungsmitteln gelöst werden.

Ein Nachteil der bisherigen Verfahren ist der relativ hohe Anteil von organischen Lösungsmitteln in den daraus hergestellten kathodisch abscheidbaren Lackzubereitungen. Er liegt im allgemeinen zwischen 3 und 10 Gew.-.% bei einem Festkörpergehalt des Bades von 15 bis 20 Gew.-%, d.h. der Gehalt der organischen Lösungsmittel, bezogen auf Fest-Körpergehalt, kann bis zu 50 bis 60 Gew.-% betragen.

Es besteht ein großes Interesse daran, den Anteil der organischen Lösungsmittel zu verringern, so daß die elektrisch abscheidbare Lackzubereitung praktisch lösungsmittelfrei ist bis auf eventuelle geringe Anteile, die sich günstig auf die Erniedrigung der Filmbildungstemperatur auswirken. Es gelingt zwar, aus dem Kunstharz und dem Härter in getrennten Operationen die Lösungsmittel abzudestillieren und wäßrige Dispersionen herzustellen, die über längere Zeit stabil sind. Beim Mischen der Kunstharz und der Härter-Dispersionen kommt es jedoch schon nach kurzer Zeit zu Sedimentationen oder Ausschwimmungen oder beiden Effekten gleichzeitig. Kunstharz und Härter lassen sich aber auch vor dem Verdünnen mit Wasser nicht vermischen, da die Kunstharze bei Raumtemperatur fest oder sehr hoch viskos sind. Eine Verflüssigung durch Temperaturerhöhung scheidet ebenfalls aus, da oberhalb 40 - 50 °C bereits die Vernetzungsreaktion einsetzt.

Der Erfindung liegt somit die Aufgabe zugrunde, eine elektrisch abscheidbare Lackzubereitung auf Basis der oben angeführten reaktiven Komponenten zu schaffen, die einen besonders niedrigen Gehalt an organischen Lösungsmitteln aufweist, in der noch keine Reaktion zwischen den Komponenten eingetreten ist und die auch bei Lagerung über Wochen keine Sedimentation und/oder Ausschwimmungen zeigt.

Gegenstand der Erfindung ist daher eine elektrisch abscheidbare, stabile Lackzubereitung bestehend im wesentlichen aus
einem Kunstharz A), das Aminogruppen und gegebenenfalls Hydroxygruppen enthält,
einem umesterungs- und/oder umamidierungsfähigen Härter B)
Wasser als Verdünnungsmittel C),
gegebenenfalls organischen Lösungsmitteln D),
sowie den üblichen Lackzusatzstoffen und gegebenenfalls Härtungskatalysatoren (E), dadurch gekennzeichnet, daß der Gehalt an organischen Lösungsmitteln höchstens 10 Gew.-%, vorzugsweise höchstens 7,5 Gew.-%, und insbesondere 2,0 bis 7.0 Gew.-%, auf den Festkörpergehalt, beträgt.

Weiterhin betrifft die Erfindung ein Verfahren zur Herstellung dieser elektrisch abscheidbaren Lackzubereitungen mit dem Kennzeichen, daß zunächst das Harz A) und gegebenenfalls auch der Härter B), separat weitgehend vom Lösungsmittel befreit werden, der verbleibende Rückstand mit einem wasserlöslichen Lösungsmittel mit einem Siedepunkt unter 100 °C verdünnt und anschließend Harz A) und Härter B) bei einer solchen Temperatur des Ansatzes vermischt werden, bei der noch keine Reaktion der Komponenten eintritt, worauf die vorhandenen Aminogruppen mit einer wasserlöslichen Säure teilweise oder volltändig neutralisiert, der Ansatz zusätzlich mit Wasser verdünnt und die organischen Lösungsmittel aus der wäßrigen Dispersion unter vermindertem Druck bei schwach erhöhter Temperatur entfernt werden.

Als Verbindung A) werden kationische Harze, wie sie bereits in großer Zahl in der Literatur beschrieben sind, eingesetzt. Voraussetzung für ihre Einsatzmöglichkeit ist eine ausreichende Anzahl basischer Gruppen, um eine einwandfreie Verdünnbarkeit mit Wasser zu gewährleisten, wie primäre, sekundäre oder tertiäre Aminogruppen. Das Aminoäquivalentgewicht beträgt zweckmäßigerweise 150 bis 3000, vorzugsweise 500 bis 2000. Das Hydroxyläquivalentgewicht der Harze, sofern sie OH-Gruppen besitzen, liegt im allgemeinen zwischen 150 und 1000, vorzugsweise 200 bis 500. Die Harze können außerdem C=C-Doppelbindungen enthalten, wobei das C=C-Equivalentgewicht vorzugsweise 500 bis 1500 beträgt.

Das Molekulargewicht (Gewichtsmittel) dieser Kunstharze A) liegt üblicherweise im Bereich von etwa 300 bis etwa 50 000, vorzugsweise etwa 5000 bis etwa 20 000.

Beispiele für derartige Kunstharze A) sind im Journal of Coatings Technology, Vol. 54, No. 686, (1982), S. 33 bis 41 ("Polymer Compositions for Cationic elektrodepositable Coatings") beschrieben, auf das hier Bezug genommen wird. Erwähnt seien hier Polymerisate aus $\alpha,\beta$-olefinisch ungesättigten Monomeren, die Hydroxy- und/oder Aminogruppen enthalten. Die Einführung der Hydroxy- oder Aminogruppen kann durch Verwendung entsprechender Monomere bei der Copolymerisation, z.B. durch Hydroxy- oder Aminoester von $\alpha,\beta$-olefinisch ungesättigten Carbonsäuren, wie Hydroxyalkyl-(meth)acrylate oder Aminoalkyl(meth)-acrylate, erfolgen oder durch polymeranaloge Umsetzung mit Di- oder Polyaminen, z.B. mit N,N-Dimethylaminopropylamin, unter Ausbildung von Amid-, Amino- oder Urethangruppen. Eine weitere Gruppe sind die aus dimerisierten Fettsäuren und Polyaminen erhältlichen Polyaminopolyamide. Besonders hierfür geeignet sind Aminopolyetherpolyole, die durch Umsetzung von primären oder sekundären Aminen mit einem Polyglycidylether zugänglich sind. Dabei sollen zweckmäßigerweise so viele Epoxidgruppen vorhanden sein, daß alle Aminogruppen in tertiäre Aminogruppen umgewandelt werden. Die bevorzugten Polyglycidylether sind Polyglycidylether von Bisphenol A und ähnlichen Polyphenolen. Man kann sie beispielsweise herstellen, indem man ein Polyphenol mit einem Epihalogenhydrin, wie Epichlorhydrin in Gegenwart von Alkali verethert.

Statt der Polyglycidylether lassen sich auch deren Umsetzungsprodukte mit $CO_2$ einsetzen. Diese Produkte enthalten cyclische Carbonatgruppen, die mit primären Aminen unte Ausbildung von Urethanen eingesetzt werden können. Je nach den Molverhältnissen von Polyglycidylether und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen.

Die Polyglycidylether der Polyphenole oder deren Umsetzungsprodukte mit $CO_2$ können als solche mit den Aminen zur Reaktion gebracht werden, jedoch ist es häufig vorteilhaft, einen Teil der reaktionsfähigen Epoxidgruppen mit einem modifizierenden Material umzusetzen, um die Filmeigenschaften zu verbessern. Besondere bevorzugt ist die Umsetzung der Epoxidgruppen mit einem Polyol oder einer Polycarbonsäure. Als Polyole können dabei verwendet werden:

- Polyetherpolyole, die hergestellt werden durch Additionspolymerisation von Alkylenoxiden (z.B. Ethylenoxid, Propylenoxid, Tetrahydrofuran) mit niedermolekularen Polyolen mit 2 bis 8 C-Atomen und einem Molekulargewicht von etwa 50 - 300 (z.B. Ethylenglykol, Diethylenglykol, Propylenglykol, Dipropylenglykol, Glycerin, Trimethylolpropan, 1,2,6-Hexantriol, Pentaerythrit). Wenn Ethylenoxid allein oder in Kombination mit anderen Alkylenoxiden als Alkylenoxidkomponente verwendet wird, wird die Wasserlöslichkeit des Kunstharzes A) verbessert;
- Polyesterpolyole, die hergestellt werden durch Umsetzung der oben genannten niedermolekularen Polyole oder von Epoxyverbindungen, z.B. Fettsäureglycidylestern, mit Polycarbonsäure (z.B. Adipinsäure, Bernsteinsäure, Maleinsäure, Phthalsäure oder Terephthalsäure) oder ihren Derivaten;
- Polyesterpolyole, die durch Ringöffnungspolymerisation eines cyclischen Esters, wie Caprolacton oder Butyrolacton hergestellt werden;
- urethanmodifizierte Polyole, die durch Umsetzung einer überschüssigen Menge der vorstehend genannten Polyetherpolyole oder Polyesterpolyole mit einem organischen Polyisocyanat erhalten werden.

Zu den oben genannten Polycarbonsäuren gelangt man durch Umsetzung der vorstehend beschriebenen Polyole mit einem Überschuß an Polycarbonsäuren oder bevorzugt deren Anhydriden. Sie können ebenfalls erhalten werden durch Veresterung von Polycarbonsäuren oder deren Anhydriden mit niedermolekularen Polyolen wie Ethylenglykol, Propylenglykol, usw. Statt der niedermolekularen Polyole können auch niedermolekulare Polyetherpolyamine oder Polyamine wie z.B. Hexamethylendiamin, eingesetzt werden.

Die Modifizierung der Aminopolyetherpolyole mit Polyolen oder Polycarbonsäuren erfolgt bevorzugt vor der Umsetzung der Polyglycidylether oder deren Umsetzungsprodukte mit $CO_2$ mit den primären oder sekundären Aminen. Es ist jedoch auch möglich, das Verhältnis des als Ausgangsmaterial verwendeten Polyglycidylethers zu den Aminen so zu wählen, daß ein Überschuß an Epoxygruppen vorhanden ist. Die Epoxygruppen können dann mit den Polycarbonsäuren oder Polyolen umgesetzt werden. Weiterhin ist es möglich, das Endprodukt, das keine Epoxidgruppen mehr enthält, durch Reaktion der Hydroxylgruppen mit Glycidylethern weiter zu modifizieren.

Als Härter B) können z.B. Michael- Additionsprodukte eingesetzt werden, wie sie in den DE-Offenlegungsschriften 33 15 469 und 34 17 441, sowie in der DE-Patentanmeldung 36 02 981.5 bechrieben sind. Geeignet sind ebenfalls Verbindungen, die Strukturelemente der allgemeinen Formel

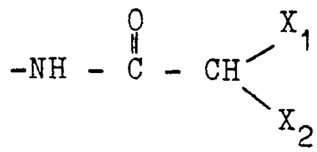 (I)

enthalten, in der $X_1$, $X_2$ für $CO_2R$, CN oder

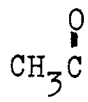

stehen und R einen Alkylrest mit vorzugsweise 1 bis 8 C-Atomen bedeutet.
Derartige Verbindungen können z.B. durch Umsetzung eines Diisocyanats mit einer CH-aciden Carbonylverbindung der Formel $CH_2X_2$ und mit Polyolen, Polyaminoalkoholen oder Polyaminen hergestellt werden und sind beispielsweise in der AT-Patentanmeldung 1602/85 offenbart. Auf vorstehend genannte Literaturstellen, einschließlich der darin beschriebenen bevorzugten Ausführungsformen, wird hiermit Bezug genommen. Die Härter B) liegen im allgemeinen als Lösungen mit einem Festkörpergehalt von 60 bis 80 Gew.-% vor. Aus ihnen kann der Anteil des Lösungsmittels nach der gleichen Methode entfernt werden wie bei dem Kunstharz A). Je nach Festkörpergehalt und Konzentration von B) in der Lackzubereitung kann gegebenenfalls auf die Entfernung der Lösungsmittel verzichtet werden.

Kunstharz A) und Härter B) werden im allgemeinen in solchen Mengen gemischt, daß das Verhältnis der Summe von zur Ester- und/oder Amidbildung fähigen Gruppen im Kunstharz zur Summe der umesterungs- und/oder umamidierungsfähigen Gruppen und der gegebenenfalls vorhandenen Doppelbindungen im Härter 10:1 bis 1:10, vorzugsweise 3:1 bis 1:3 beträgt. Dabei sollten die Mengen so gewählt werden, daß eine ausreichende Vernetzungsdichte der Überzuge resultiert und diese eine gute Lösungsmittelresistenz und hohe Flexibilität aufweisen. Im allgemeinen wird dies bei einem Verhältnis der Gewichtsteile von Kunstharz A) und Härter B) (jeweils Feststoff) im Bereich von 90:10 bis 30:70, vorzugsweise 50:50 bis 80:20, erreicht.

Die erfindungsgemäßen Lackzubereitungen enthalten im allgemeinen auch die bekannten Zusatzstoffe wie Pigmente, Pigmentpasten, Antioxidantien, oberflächenaktive Mittel, Lösungsmittel, Verlauf- und Verdikkungsmittel, Reaktivverdünner etc. sowie gegebenenfalls Härtungskatalysatoren. Derartige Zusatzstoffe sind bekannt und werden üblicherweise in der Lackindustrie eingesetzt. Als Katalysatoren für die Herstellung eignen sich beispielsweise Metallsalze organischer Säuren, insbesondere Zink-, Blei-, Eisen-oder Chromoctoat oder -naphthenat. Die Katalysatoren beschleunigen auch die Vernetzungsreaktionen der im Härtermolekül evtl. enthaltenden Doppelbindungen. Die Menge dieser Katalysatoren liegt zweckmäßigerweise zwischen 0 und 10 Gew.-%, vorzugsweise zwischen 0,1 und 2,0 Gew.-%, berechnet als Gewichtsmenge Metall und bezogen auf das Gesamtgewicht von Kunstharz und Härter.

Bei dem erfindungsgemäßen Verfahren wird zunächst das organische Lösungsmittel aus dem Harz A) und gegebenenfalls aus dem Härter B) vorzugsweise unter vermindertem Druck im Bereich von 20 bis 130 mbar und bei einer möglichst tiefen Temperatur, vorzugsweise unterhalb von 100 °C weitgehend entfernt. Im allgemeinen ist dabei eine Lösungsmittelentfernung bis zu einem Festkörpergehalt von 90 - 95 Gew.-% ausreichend. Dann wird durch Zugabe eines wasserlöslichen Lösemittels mit einem Siedepunkt von weniger als 100 °C verdünnt und Harz A) mit dem Härter B) bei einer Temperatur von vorzugsweise unter 40 °C vermischt. Nach der gegebenenfalls nur teilweisen Neutralisation der Aminogruppen mit einer wasserlöslichen Säure und dem zusätzlichen Verdünnen mit Wasser wird das organische Lösungsmittel aus der wäßrigen Dispersion unter vermindertem Druck bei einer Temperatur von vorzugsweise maximal 40 °C entfernt. Anschließend kann weiter mit Waser verdünnt werden. Auf diese Weise erhält man wäßrige Dispersionen, die ohne weitere Zusätze, z.B. von Emulgatoren über mehrere Monate, und zwar mindestens 6 Monate, stabil sind.

Das Verdünnen der konzentrierten Harzlösung oder Härterlösung mit den wasserverdünnbaren Lösungsmittel mit einem Siedepunkt von unter 100 °C, vorzugsweise unter 80 °C, geschieht im allgemeinen in der Weise, daß die Lösungsmittel langsam in die noch heiße, hochkonzentrierte Harzlösung gegeben

werden und diese bis zum Siedepunkt des jeweilig eingesetzten Lösungsmittels abgekühlt wird. Bei dieser Temperatur wird der Ansatz dann solange gerührt bis eine homogene Mischung entstanden ist. Einsetzbare Lösungsmittel sind niedere Alkohole und Ketone beispielsweise Methanol, Ethanol, Isopropanol, Aceton und Methylethylketon. Im allgemeinen wird ein Festkörpergehalt der Lösung von mehr als 50, vorzugsweise mehr als 60 Gew.-% eingestellt. Die entstandene Mischung wird bei einer Temperatur, bei der noch keine Reaktion der Komponenten eintritt, beispielsweise unter 40 °C, mit dem Härter B) vermischt.

Eine teilweise oder vollständige Neutralisation der im Falle des kathodisch abscheidbaren Lackes vorhandenen Aminogruppen kann mit wasserlöslichen Säuren vor dem Verdünnen mit Wasser erfolgen. Man kann die wasserlösliche Säure aber auch ganz oder teilweise vor dem Verdünnen mit dem benötigten Wasser vermischen, so daß die Neutralisation erst bei der Verdünnung erfolgt. Im allgemeinen wird nur soviel Säure zugegeben, daß das Bad die erforderliche Stabilität besitzt und keine Ausfällungen auftreten. Geeignete Säuren sind beispielsweise Ameisensäure, Essigsäure, Milchsäure und Phosphorsäure.

Im allgemeinen gibt man so viel Wasser zu, daß die Dispersion einen Festkörpergehalt von mehr als 20, vorzugsweise mehr als 30 Gew.-% besitzt.

Die Entfernung des organischen Lösungsmittels aus der wäßrigen Dispersion wird dann vorzugsweise unter vermindertem Druck bei 20 bis 70 mbar, und bei solchen Temperaturen durchgeführt, bei denen keine Reaktion der Komponenten eintreten kann. Im allgemeinen wird bei einer Temperatur von höchstens 40 °C, vorzugsweise 30 °C gearbeitet. Dabei wird ein Wasser/Lösungsmittelgemisch abdestilliert, aus dessen Zusammensetzung sich der Restgehalt an organischen Lösungsmitteln in der wäßrigen Dispersion bestimmt.

Die elektrische Abscheidung der erfindungsgemäßen Lackzubereitungen erfolgt nach bekannten Verfahren, worauf hier Bezug genommen wird. Die Abscheidung kann auf allen elektrisch leitenden Substraten erfolgen z.B. Metall, wie Stahl, Kupfer, Aluminium und dergleichen. Die Elektrotauchlacke können dabei als Klarlacke oder als pigmentierte Zubereitungen vorliegen.

In den nachfolgenden Beispielen bedeuten T bzw. % stets Gewichtsteile bzw. Gewichtsprozent.

Beispiel 1

a) Herstellung des Kunstharzes A):

Nach bekannten Methoden wurde ein Aminopolyetherpolyol aus 65,5 % eines Bisphenol-A-Epoxydharzes mit einem Epoxyäquivalentgewicht von 480, 18,8 % eines Polyesters aus Trimethylolpropan, Adipinsäure, Isononansäure und Tetrahydrophthalsäureanhydrid mit einer Säurezahl von 65 mg KOH/g und einer Hydroxylzahl von 310 mg KOH/g, 6,1 % Diethanolamin, 4,4 % 2-Ethylhexylamin und 5,2 % Diethylaminopropylamin hergestellt. Die Reaktion des Epoxidharzes mit dem Polyester erfolgte bei 130 °C bis ein Epopxyequivalentgewicht von ca. 620 (bzw. auf Festharz) erreicht war. Zur weiteren Umsetzung wurden die Amine vorgelegt und das Reaktionsprodukt aus Epoxidharz und Polyester bei 80 °C zudosiert. Die Reaktion war beendet, wenn eine Epoxidzahl von annähernd 0 erreicht war. Das Produkt lag als 65 %ige Lösung in Propylenglykolmonoethylether vor und hatte eine Aminzahl von 96 mg KOH/g.

b) Herstellung des Härters B)

In einem Reaktor wurden 2160 T Hydroxyethylacrylat mit einer Säurezahl 1, 3,8 T Zinkacetylacetonat vorgelegt, auf 60 °C erhitzt, 1636 T Toluylendiisocyanat langsam zugetropft und so lange bei 60 °C gehalten, bis der Gehalt an -N=C=O Gruppierungen kleiner als 0,2 % war. Anschließend wurden 15 T Hydrochinon und 844 T Ethylenglykolmonohexylether zugesetzt. Es wurde eine 80 %ige helle Harzlösung mit einem Doppelbindungsgehalt von 9,5 % erhalten.

1016 T dieses Vorprodukts, 10 T KOH, 30 %ig in Methanol, wurden in einem Reaktor vorgelegt, auf 80 °C erhitzt und 132 T Malonsäuredimethylester langsam zugetropft, so daß 80 °C nicht überschritten wurden. Bei dieser Temperatur wurde so lange gehalten, bis der Gehalt an -C=C-Doppelbindungen auf 4,2 % abgefallen war. Die Reaktionsmischung wurde mit Ethylenglykolmonohexylether auf 80% Festkörper-Gehalt verdünnt und mit 2 T Essigsäure versetzt. Es wurde eine gelbliche Harzlösung erhalten.

c) Wäßrige Kunstharz-/Härter-Dispersion:

Aus 3528 T der Lösung des obigen Aminopolyetherpolyols wurden bei 90 - 110 °C unter vermindertem Druck 1036 T Propylenglykolmonomethylether abdestilliert und bei 90 °C langsam 784 T Ethanol zugegeben. Die Mischung kühlte sich dabei auf 78 °C ab und wurde solange bei dieser Temperatur nachgeführt

bis eine homogene Mischung entstand. Anschließend wurde auf 30 °C abgekühlt und nacheinander 1229 T der Härterlösung und 106 T Bleioctoat zugegeben. Nachdem die Mischung homogen geworden war, wurde sie in eine Lösung von 59 T Ameisensäure (85 %ig) in 6610 T entionisiertem Wasser gegeben. Aus der ca. 31 %igen wäßrigen Dispersion wurde bei 35 - 40 °C unter vermindertem Druck von ca. 40 mbar 2227 T eines Gemisches aus Wasser, Ethanol und wenig Propylenglykolmonomethyl-und Ethylenglykolmonohexylether abdestilliert. Es wurden 9053 T einer 37 %igen wäßrigen Dispersion erhalten, die nach gaschromatographischer Analyse noch 0,6 % Ethanol, 0,4 % Propylenglykolmonoethylether und 1,4 % Ethylenglykolmonohexylether enthielt.

d) Elektrotauchlack und anwendungstechnische Prüfung

43 T der 37 %igen wäßrigen Bindemittel/Härter-Dispersion wurden mit 13,7 T $TiO_2$, 1,2 T Bleisilikat und 0,1 T Ruß versetzt und in einer Perlmühle abgerieben und dem Ansatz anschließend weitere 79 T der 37 %igen wäßrigen Dispersion zugegeben. Mit einem schnell laufenden Rührwerk wurde der Ansatz dann mit entionisiertem Wasser verdünnt, bis der Festkörpergehalt 20 % betrug. Das Lackbad wurde 24 Stunden gerührt und wies dann folgende Kenndaten auf:
Gehalt an organsichem Lösungsmittel, bezogen auf Festkörpergehalt: 4,8 Gew.-%; pH-Wert 5,8; Leitfähigkeit 1740 $\mu Scm^{-1}$; MEQ-Wert 40. Es ist über mindestens 6 Monate stabil. Auf phosphatiertem als Kathode geschaltetem Stahlblech erhält man nach Abscheidung bei 28 °C Badtemperatur, 2 Minuten bei 300 V und Härtung (30 Minuten, 163 °C) einen glatten Überzug mit einer Schichtdicke von 20 µm, einer Lösungsmittelbeständigkeit von mehr als 100 Doppelhüben mit Aceton und einer Schlagtiefung nach Niessen von 80 cm.

Beispiel 2

a) Herstellung des Kunstharzes A)

Vorprodukt 1): 415 T eines Polycaprolactondiols mit einem mittleren Molekulargewicht von 830 (Capa(R) 205),550 T eines Polypropylenglykols mit einem mittleren Molekulargewicht von 1110 (Pluriol(R) 3100) und 304 T Tetrahdrophthalsäureanhydrid wurden in Gegenwart von 4 T Triethylamin bei 120 °C bis zu einer Säurezahl von ca. 88 umgesetzt. Anschließend wurden 832 T eines Monocarbonats, das aus Bisphenol-A-diglycidylether mit einem Epoxyequivalentgewicht von 180 (Epicote(R) 828) und Kohlendioxid erhalten wurde, zugesetzt und die Mischung solange auf 120 °C erhitzt, bis eine Säurezahl und eine Epoxidzahl von annähernd 0 erreicht waren.

Kunstharz: 3144 T eines Dicarbonates, das aus einem Bisphenol-A-diglycidylether mit einem Epoxydequivalentgewicht von ca. 480 (Epicote(R) 1001) und Kohlendioxid erhalten wurde, 608 T eines Carbonates aus Versaticsäureglycidylester mit einem Epoxyequivalentgewicht von ca. 245 (Cardura(R)) und Kohlendioxid, sowie 2101 T des Vorprodukts 1) wurden in 2970 T Propylenglykolmonomethylether und 1075 T Bishexamethylentriamin gegeben und solange bei 120 °C gehalten, bis eine Aminzahl von ca. 40 erreicht war.

d) Herstellung des Härters B

In einem Gemisch aus 290,4 T Malonsäuredimethylester, 1,6 T Natriumphenolat und 352 g Ethylenglykoldimethylether wurden innerhalb von 8 Stunden kontinuierlich bei Raumtemperatur 444 g 3-Isocyanatomethyl-3,4,5-Trimethylcyclohexylisocyanat gegeben. Man ließ solange bei Raumtemperatur weiterreagieren, bis der Isocyanatgehalt 6,9 % betrug. Das Reaktionsgemisch wurde dann so schnell in eine Mischung aus 77,7 T Trimethylolpropan, 0,8 T Dibutylzinndilaurat und 480 T Ethylenglykoldimethylether gegeben, daß die Reaktionstemperatur 30 °C nicht überschritt. Anschließend erwärm man solange auf 60 °C bis der Isocyanatgehalt unter 0,1 % lag. Aus der Reaktionsmischung wurde im Vakuum soviel Ethylenglykoldimethylether abdestilliert, daß der Festkörpergehalt 70 % betrug.

c) Wäßrige Kunstharz-/Härter-Dispersion:

Aus 590 T der Lösung des Kunstharzes 2a) wurden bei 90 - 110 °C unter vermindertem Druck 117 T Propylenglykolmonomethylether abdestilliert und dann langsam 137,5 T Methanol zugegeben. Die Mischung kühlte sich dabei auf 65 °C ab und wurde solange bei dieser Temperatur nachgerührt bis eine homogene Mischung entstand. Anschließend wurde auf 30 °C abgekühlt und nacheinander 357 T der Härterlösung 2b) und 20 T Bleioctoat zugegeben. Nachdem die Mischung homogen geworden war, wurde

sie in eine Lösung von 9,4 T Ameisensäure (85 %ig) in 1.250 T entionisiertem Wasser gegeben. Aus der ca. 31 %igen Dispersion wurden bei 30 - 35 °C unter vermindertem Druck von ca. 30 bar ein Gemisch aus Wasser, Methanol, Ethylenglykoldimethylether und wenig Propylenglykolmonomethylether abdestilliert. Es wurden 1.596 T einer 42,5 %igen wäßrigen Dispersion erhalten, die nach gaschromatographischer Analyse noch 0,5 % Methanol, 0,1 % Ethylenglykoldimethylether und 0,01 % Propylenglykolmonomethylether enthielt.

d) Elektrotauchlack und anwendungstechnische Prüfung

Die wäßrige Bindemittel/Härter-Dispersion wurde mit entionisiertem Wasser verdünnt, bis der Festkörpergehalt 15 % betrug. Das Lackbad wurde 24 Stunden gerührt und wies dann folgende Kenndaten auf:
Gehalt an organischen Lösungsmitteln, bezogen auf Festkörpergehalt: 1,3 %; pH-Wert: 5,8; Leitfähigkeit: 1140 ° μS $cm^{-1}$; MEQ-Wert: 73.
Auf phosphatiertem als Kathode geschaltetem Stahlblech erhielt man nach Abscheidung bei 20 °C Badtemperatur, 2 Min. bei 300 V Härtung (20 Min./120 °C) einen glatten Überzug mit einer Schichtdicke von 15 μm und einer Lösungsmittelbeständigkeit von mehr als 100 Doppelhüben mit Aceton.

**Patentansprüche**

1. Verfahren zur Herstellung von Elektrisch abscheidbaren, stabilen Lackzubereitungen bestehend im wesentlichen aus

   einem Kunstharz A), das Aminogruppen und gegebenenfalls Hydroxylgruppen enthält,
   einem umesterungs- und/oder umamidierungsfähigen Härter B), Wasser als Verdünnungsmittel C),
   gegebenenfalls organischen Lösungsmitteln D),

   sowie den üblichen Lackzusatzstoffen und gegebenenfalls Härtungskatalysatoren E), mit einem Gehalt an organischen Lösungsmitteln von höchstens 10 Gew.-%, bezogen auf den Festkörpergehalt, dadurch gekennzeichnet, daß zunächst das Harz A) und gegebenenfalls der Härter B) separat weitgehend vom Lösungsmittel befreit werden, der verbleibende Rückstand mit einem wasserlöslichen Lösungsmittel mit einem Siedepunkt unter 100 °C verdünnt und anschließend Harz A) mit dem Härter B) bei einer solchen Temperatur des Ansatzes vermischt wird, bei der noch keine Reaktion der Komponenten eintritt, worauf die vorhandenen Aminogruppen mit einer wasserlöslichen Säure teilweise oder vollständig neutralisiert, der Ansatz zusätzlich mit Wasser verdünnt und das organische Lösungsmittel aus der wäßrigen Dispersion unter vermindertem Druck bei schwach erhöhter Temperatur entfernt werden.

2. Verfahren zur Herstellung von Elektrisch abscheidbaren Lackzubereitungen nach Anspruch 1, dadurch gekennzeichnet, daß der Gehalt an organischen Lösungsmitteln höchstens 7,5 Gew.-%, bezogen auf den Festkörpergehalt, beträgt.

3. Verfahren zur Herstellung von Elektrisch abscheidbaren Lackzubereitungen nach Anspruch 1 und/oder 2, dadurch gekennzeichnet, daß sie kathodisch abscheidbar sind, und das Kunstharz A) zusätzlich C=C-Doppelbindungen enthält.

4. Verfahren nach einem oder mehreren der Ansprüche 1 bis 3, dadurch gekennzeichnet, daß als Verbindungen A) Polymerisate aus $\alpha,\beta$-olefinisch ungesättigten Monomeren mit Hydroxy- und/oder Aminogruppen, Polyaminopolyamide aus dimerisierten Fettsäuren und Polyaminen oder Aminopolyetherpolyole, erhalten durch Umsetzung von Epoxidharzen mit primären oder sekundären Aminen, eingesetzt werden.

5. Verfahren nach Anspruch 1 und/oder 4, dadurch gekennzeichnet, daß als wasserlösliche Lösungsmittel niedere Alkohole oder Ketone eingesetzt werden.

6. Verfahren nach Anspruch 5, dadurch gekennzeichnet, daß Methanol, Ethanol, Isopropanol, Aceton oder Methylethylketon eingesetzt werden.

7. Verfahren nach einem oder mehreren der Ansprüche 1 bis 6, dadurch gekennzeichnet, daß der Härter bei einer Temperatur bis 40 °C zugegeben und das organische Lösungsmittel aus der wäßrigen

Dispersion bei höchstens 40 °C entfernt wird.

**8.** Verfahren nach einem oder mehreren der Ansprüche 1 bis 7, dadurch gekennzeichnet, daß als Härter B) Michael-Additionsprodukte oder Verbindungen eingesetzt werden, die Strukturelemente der allgemeinen Formel

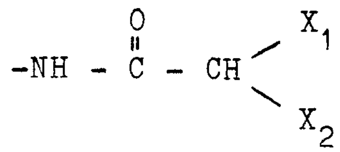

(I)

enthalten, in der $X_1$, $X_2$ für $CO_2R$, CN oder

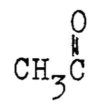

stehen und R einen Alkylrest mit vorzugsweise 1 bis 8 C-Atomen bedeutet.

**9.** Verfahren nach einem oder mehreren der Ansprüche 1 bis 8, dadurch gekennzeichnet, daß das Gewichtsverhältnis von Kunstharz A) zu Härter B) (jeweils Feststoff) 90:10 bis 30:70 beträgt.

**10.** Verfahren nach einem oder mehreren der Ansprüche 1 bis 9, dadurch gekennzeichnet, daß als Härtungskatalysatoren Metallsalze organischer Säuren dienen.

**11.** Verfahren nach Anspruch 10, dadurch gekennzeichnet, daß die Härtungskatalysatoren Zink-, Blei-, Eisen-Chromoctoat- oder -naphthenat sind.

**12.** Verfahren nach einem oder mehreren der Ansprüche 1 bis 11, dadurch gekennzeichnet, daß als wasserlösliche Säuren Ameisensäure, Essigsäure, Milchsäure oder Phosphorsäure eingesetzt werden.

**13.** Verwendung der Lackzubereitungen gemäß einem oder mehreren der Ansprüche 1 bis 12 zur Beschichtung von Metallsubstraten.

**14.** Verwendung nach Anspruch 10, dadurch gekennzeichnet, daß die Beschichtung durch kathodische Abscheidung erfolgt.

## Claims

**1.** A process for the preparation of an electrodepositable, stable coating preparations essentially comprising
a synthetic resin A), which contains amino groups and, if appropriate, hydroxyl groups,
a hardener B) which is capable of transesterification and/or transamidation,
water as diluent C), and
if appropriate, organic solvents D),
and also the conventional coating additives and, if appropriate, hardening catalysts E), the organic solvents content amounting to a maximum of 10 % by weight, relative to the solids content, characterized in that the resin A) and, if appropriate, the hardener B), separately, are substantially freed of solvent, the residue remaining is diluted with a water-soluble solvent having a boiling point of below 100 °C, and the resin A) is subsequently mixed with the hardener B) at a batch temperature such that the components do not react, whereupon the amino groups present are neutralized, partially or completely, using a water-soluble acid, the batch is additionally diluted with water, and the organic solvent is removed from the aqueous dispersion under reduced pressure at a slightly elevated temperature.

**2.** The process for the preparation of electrodepositable coating preparations as claimed in claim 1, characterized in that the organic solvents content is a maximum of 7.5 % by weight, relative to the solids content.

**3.** The process for the preparation of electrodepositable coating preparations as claimed in claim 1 and/or 2, characterized in that they are cathodically depositable, and the synthetic resin A) additionally contains C = C double bonds.

**4.** The process as claimed in one or more of claims 1 to 3, characterized in that polymers of a α, β-olefinically unsaturated monomers having hydroxyl and/or amino groups, polyaminopolyamides of dimerized fatty acids, amd polyamines or aminopolyether polyols, obtained by reaction of epoxy resins with primary or secondary amines, are employed as compounds A).

**5.** The process as claimed in claim 1 and/or 4, characterized in that lower alcohols or ketones are employed as water-soluble solvents.

**6.** The process as claimed in claim 5, characterized in that methanol, ethanol, isopropanol, acetone or methyl ethyl ketone are employed.

**7.** The process as claimed in one or more of claims 1 to 6, characterized in that the hardener is added at a temperature up to 40 °C and the organic solvent is removed from the aqueous dispersion at a maximum of 40 °C.

**8.** The process as claimed in one or more of claims 1 to 7, characterized in that Michael addition products or compounds which contain the structural elements of the general formula

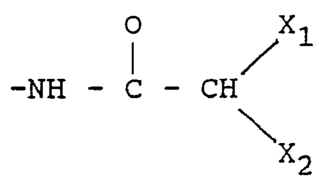

(I)

in which $X_1$ and $X_2$ represent $CO_2R$, CN or

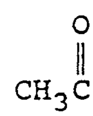

and R denotes an alkyl radical preferably having 1 to 8 C atoms, are employed as hardener B).

**9.** The process as claimed in one or more of claims 1 to 8, characterized in that the weight ratio of synthetic resin A) to hardener B) (in each case solid) is 90:10 to 30:70.

**10.** The process as claimed in one or more of claims 1 to 9, characterized in that metal salts of organic acids serve as hardening catalysts.

**11.** The process as claimed in claim 10, characterized in that the hardening catalysts are zinc, lead, iron or chromium octoate or naphthenate.

**12.** The process as claimed in one or more of claims 1 to 11, characterized in that formic acid, acetic acid, lactic acid or phosphoric acid are employed as water-soluble acids.

**13.** The use of the coating preparations as claimed in one or more of claims 1 to 12 for coating metal substrates.

**14.** The use as claimed in claim 10, characterized in that coating is carried out by cathodic deposition.

**Revendications**

**1.** Procédé pour la réalisation de préparations de peinture stables, pour électrodéposition, comprenant essentiellement :

- une résine synthétique A) contenant des groupes amino et éventuellement des groupes hydroxyle,
- une durcisseur B) pouvant subir une transestérification et/ou une transamidation,
- de l'eau en tant que diluant C),
- éventuellement des solvants organiques D),

ainsi que les additifs usuels pour peintures et éventuellement des catalyseurs de durcissement E), avec une teneur en solvants organiques au plus égale à 10 % en poids par rapport à l'extrait sec, caractérisé en ce que, d'abord, on débarrasse presque complètement du solvant séparément la résine A) et éventuellement le durcisseur B), on dilue le résidu avec un solvant soluble dans l'eau ayant un point d'ébullition inférieur à 100 °C, puis on mélange la résine A) au durcisseur B) à une température de la masse réactionnelle à laquelle il n'y a encore aucune réaction entre les composants, puis les groupes amino présents sont neutralisés en totalité ou en partie avec un acide soluble dans l'eau, la masse réactionnelle est encore diluée à l'eau, et le solvant organique est chassé de la dispersion aqueuse sous pression réduite et à une température peu élevée.

**2.** Procédé de réalisation de préparations de peinture pour électrodéposition selon la revendication 1, caractérisé en ce que la teneur en solvants organiques est au plus de 7,5 % en poids par rapport à l'extrait sec.

**3.** Procédé de réalisation de préparations de peinture pour électrodéposition selon la revendication 1 et/ou 2, caractérisé en ce qu'elles peuvent subir une électrodéposition cathodique et que la résine synthétique A) contient en outre des doubles liaisons C = C.

**4.** Procédé selon l'une ou plusieurs des revendications 1 à 3, caractérisé en ce qu'on utilise comme composés A) des polymères de monomères à insaturation $\alpha,\beta$-oléfinique comportant des groupes hydroxy et/ou amino, des polyaminopolyamides d'acides gras dimérisés et de polyamines ou des aminopolyétherpolyols obtenus par réaction de résines époxydes avec des amines primaires ou secondaires.

**5.** Procédé selon la revendication 1 et/ou 4, caractérisé en ce qu'on utilise comme solvants solubles dans l'eau des alcools ou cétones inférieurs.

**6.** Procédé selon la revendication 5, caractérisé en ce qu'on utilise du méthanol, de l'éthanol, de l'isopropanol, de l'acétone ou de la méthyléthylcétone.

**7.** Procédé selon l'une ou plusieurs des revendications 1 à 6, caractérisé en ce que le durcisseur est ajouté à une température allant jusqu'à 40 °C et que le solvant organique est chassé de la dispersion aqueuse à une température maximale de 40 °C.

**8.** Procédé selon l'une ou plusieurs des revendications 1 à 7, caractérisé en ce qu'on utilise comme durcisseur B) des produits d'addition de Michael ou des composés contenant des éléments structuraux de formule générale

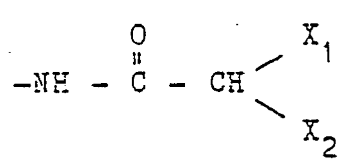

(I)

dans laquelle $X_1$ et $X_2$ représentent $CO_2R$, CN ou

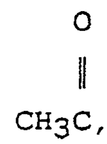

et R est un radical alkyle ayant de préférence 1 à 8 atomes de carbone.

**9.** Procédé selon l'une ou plusieurs des revendications 1 à 8, caractérisé en ce que le rapport pondéral de la résine A) au durcisseur B) (toujours sous forme d'extrait sec) est de 90:10 à 30:70.

**10.** Procédé selon l'une ou plusieurs des revendications 1 à 9, caractérisé en ce que les catalyseurs de durcissement sont des sels métalliques d'acides organiques.

**11.** Procédé selon la revendication 10, caractérisé en ce que les catalyseurs de durcissement sont l'octoate ou le naphténate de zinc, de plomb, de fer ou de chrome.

**12.** Procédé selon l'une ou plusieurs des revendications 1 à 11, caractérisé en ce qu'on utilise comme acides solubles dans l'eau l'acide formique, l'acide acétique, l'acide lactique ou l'acide phosphorique.

**13.** Utilisation des préparations de peinture selon l'une ou plusieurs des revendications 1 à 12 pour le revêtement de subjectiles métalliques.

**14.** Utilisation selon la revendication 10, caractérisée en ce que le revêtement est effectué par électrodéposition cathodique.